# EUROPÄISCHE PATENTSCHRIFT

(11) **EP 3 186 443 B1**
(45) Veröffentlichungstag und Bekanntmachung des Hinweises auf die Patenterteilung: **31.07.2019**
(21) Anmeldenummer: 15756599.5
(22) Anmeldetag: 20.08.2015
(51) Int. Cl.: E01B 25/24

(54) **LAUFSCHIENE UND VERFAHREN ZUR HERSTELLUNG EINER SOLCHEN LAUFSCHIENE**
RUNNING RAIL AND METHOD FOR PRODUCING SUCH A RUNNING RAIL
RAIL DE ROULEMENT ET SON PROCÉDÉ DE FABRICATION

(30) Priorität: 27.08.2014 CH 12892014
(43) Veröffentlichungstag der Anmeldung: 05.07.2017
(73) Patentinhaber: Ferag AG, 8340 Hinwil (CH)
(72) Erfinder: FENILE, Roberto, 8623 Wetzikon (CH); KÄLIN, Erich, 8640 Rapperswil (CH)
(74) Vertreter: Rentsch Partner AG
(86) Internationale Anmeldenummer: PCT/EP2015/069156
(87) Internationale Veröffentlichungsnummer: WO 2016/030274

(56) Entgegenhaltungen:
- DE-A1- 3 347 842
- DE-C1- 3 910 542
- DE-U1- 9 204 955
- FR-A5- 2 231 256

## Beschreibung

### Technisches Gebiet

Die vorliegende Erfindung bezieht sich auf die Förderung von Waren. Sie betrifft eine Laufschiene für Förderer, insbesondere für einen Schwerkraftförderer, sowie ein Verfahren zur Herstellung einer solchen Laufschiene.

### Stand der Technik

Bei der Produktion und Nachbearbeitung von Gütern, wie auch bei der Kommissionierung und Verpackung von Aufträgen spielt die automatisierte Förderung von Waren eine wichtige Rolle. Insbesondere Hängefördersysteme zeichnen sich dabei neben anderem dadurch aus, dass sie eine Verlagerung der Förderung von Waren vom Boden in ansonsten ungenutzte räumliche Bereiche innerhalb oder ausserhalb von Gebäuden ermöglichen. Häufig werden Hängeförderanlagen deshalb überkopf an Trägern befestigt, die an der Decke, Wänden oder einzelnen am Boden befestigten Säulen angebracht sind.

Fördersysteme finden zudem Verwendung als Puffer zwischen zwei oder mehreren Arbeitsprozessen mit unterschiedlichen Geschwindigkeiten. Dadurch können vernetzte Prozesse zeitlich und/oder räumlich entkoppelt werden, womit beispielsweise Störungen in Prozessen behoben werden können, ohne die übrigen Teile einer Prozesskette anhalten zu müssen. Ebenso können damit Taktunterschiede in der Verarbeitung abgefedert werden.

Schwerkraftförderer, insbesondere Schwerkrafthängeförderer, eignen sich in vielen Bereichen besonders zum Aufbau von Puffern. Dies einerseits aufgrund der bereits erwähnten besseren Raumausnutzung. Andererseits sind sie relativ energiesparend, da sie im Unterschied etwa zu zwangsgeförderten Hängefördersystemen keine den Laufschienen über die gesamte Länge entlang führenden Antriebsmittel wie z.B. Antriebsketten benötigen, sondern meist nur wenige kurze zwangsgeförderte Streckenteile aufweisen. Dadurch können Schwerkrafthängeförderer auch relativ einfach und kostengünstig gezielt auf veränderte Produktionsanforderungen hin verkleinert oder vergrössert werden.

Für den sicheren Betrieb vieler Fördersysteme, insbesondere von Schwerkrafthängeförderern, ist es wichtig, dass die verwendeten Laufschienen über gleichbleibend gute Laufeigenschaften verfügen. Insbesondere muss sicher gestellt sein, dass Transportkörper auf schwerkraftgeförderten Bahnteilen nicht ungewollt abbremsen oder gar zum Stehen kommen, da dies zu Verzögerungen oder Unterbrüchen in der Förderung führen würde. Die verwendeten Laufschienen müssen dazu den sich auf ihnen bewegenden Laufwagen ein widerstandsarmes Rollen und/oder Gleiten ermöglichen.

Im Stand der Technik sind unterschiedliche Arten von Laufschienen für Förderanlagen bekannt.

In der am 19.03.2014 eingereichten, noch unveröffentlichten internationalen Patentanmeldung PCT/CH2014/000032 derselben Anmelderin wird neben anderem ein schienengefördertes Fördermittel enthaltend einen Förderwagen mit mindestens einer ersten, zweiten und dritten Laufrolle entlang einer Schienenführung beschrieben. Die Rotationsebenen der mindestens ersten, zweiten und dritten Laufrolle sollen dabei in einem Winkel von grösser 0° und kleiner 180° relativ zueinander angeordnet sein. Zur Vermeidung eines Kippmoments in Förderrichtung der unabhängig voneinander entlang einer Förderstrecke bewegten Förderwagen ist eine Anordnung von zwei oder mehr ersten, zweiten und/oder dritten Laufrollen vorgesehen. Ebenso wird eine Förderanlage mit solchen Fördermitteln beschrieben. Gemäss der Patentanmeldung kann eine solche Förderanlage über eine Schienenführung mit einem Schienenkörper verfügen, welcher mindestens einen Schienenkörperlängsabschnitt mit mindestens drei am Aussenumfang des Schienenkörpers angeordneten Laufflächen für die ersten, zweiten und dritten Laufrollen des Fördermittels aufweist. Dabei sollen die Flächennormalen der dieser Laufflächen in einem Winkel von grösser 0° und kleiner 180° angeordnet sein. Die Patentanmeldung zeigt dazu verschiedenartig ausgeprägte Sechskantprofile.

Von derselben Anmelderin wird im Internet (http://www.ferag.com/de/1033/Puffern.htm) ein mit der genannten internationalen Anmeldung in Verbindung stehendes System zur Pufferung von Gütern während der Produktion gezeigt. Dieses System eignet sich für eine Vielzahl von Anwendungen. Bei einigen bestimmten Anwendungen kann es jedoch notwendig sein, die Laufwagen, die Schienenart und den Schienenverlauf speziell auf das Fördergut abzustimmen, um ein optimales Ergebnis zu erhalten.

Die EP 0 856 480 A1 beschreibt ein schienengeführtes Transportmittel insbesondere zum Fördern von Druckerzeugnissen sowie eine Transportanlage mit derartigen Transportmitteln. Das Transportmittel umfasst mehrere Räder, die auf zwei Seiten einer Führungsschiene aufliegen. Bewegungen quer zur Förderrichtung sollen dabei mittels eines an den Rädern angebrachten Spurkranzes verhindert werden. Durch zueinander versetzt angeordnete Räder oder Gleitmittel soll ein Transportmittel gemäss Beschreibung weitgehend spielfrei an der Führungsschiene gelagert und geführt werden. Die Patentanmeldung zeigt Laufschienen mit einer flachen, bandartigen Form, sowie solche mit einer T-Form.

Die US 4,531,460 zeigt ein Materialtransportsystem, das sich auch für den hängenden Transport von Gütern mit hohem Gewicht eignet. Beschrieben werden Träger, die wenigstens zwei mechanisch verbundenen Trägerköpfe umfassen. Dabei kann ein Kopf als Antriebskopf und der zweite Kopf als Mitläuferkopf dienen. Die beiden Trägerköpfe weisen jeweils Tragräder auf, die auf horizontalen Laufflächen eine Tragschiene laufen. Zusätzlich weisen die Trägerköpfe um vertikal angeordnete Achsen rotierende kleinere Führungsrollen auf, die über und unter den Tragrädern angeordnet sind. Die gezeigten Tragschienen weisen oben und unten angeordnete Führungsgurten auf, die von den Führungsrollen kontaktiert werden können. Die gezeigten Trägerköpfe können keine Drehmomente um horizontale Querachsen auf die gezeigten Tragschienen übertragen.

Die DE 3347842 A1 beschreibt eine Tragschienenanordnung für Hängebahnen, Krane od. dgl., mit einer gegebenenfalls aus mehreren Schienenstücken zusammengesetzten selbsttragenden Tragschiene und dieser zugeordneten Verbindungs-, Aufhänge- und/oder Befestigungselementen. Die Tragschiene weist eine im wesentlichen I-förmige Querschnittsgestalt mit einem hohlen oberen und einem hohlen unteren Gurt auf, die jeweils als rohrförmige Hohlkörper ausgebildet sind, und die Laufflächen für Laufräder der Hängebahn- oder Kranfahrzeuge tragen sowie durch einen in der Mittelebene der Gurte verlaufenden flachen Steg miteinander verbunden sind.

Die EP 0 291 622 B1 zeigt eine Schiene zur Führung einer Antriebskette in einem Förderbandsystem zur Handhabung einzelner Gegenstände, mit dem die Gegenstände auf wählbaren Pfaden bewegbar sind. Die Schiene soll eine Mehrzahl von vorgefertigten, lösbar miteinander verbundenen Modulen umfassen, wobei jeder Modul einen Abschnitt von quadratischem Querschnitt bildet. Gemäss der Druckschrift ist vorgesehen, dass die Module aus geraden und gekrümmten Modulen bestehen, wobei es nur einen Typ von gekrümmtem Modul gibt und der Krümmungsradius der gekrümmten Module vom kleinsten Kurvenradius der verwendeten Antriebskette bestimmt wird. An jedem Modul ist auf jeder seiner vier Seiten eine zur entsprechenden Antriebskette passende Führung angeordnet. Auf diese Weise können aufsteigende oder absteigende Pfade sowie Kurven mit dem einen Typ von gekrümmtem Modul erzeugt werden, indem dieses gedreht wird und die Antriebskette offenbar in der jeweils vertikal nach unten gerichteten Führung angeordnet wird. Die nicht von der der Antriebskette besetzten Führungen sollen wie gezeigt etwa der Aufnahme von Verbindern mehrerer Module dienen.

Es hat sich herausgestellt, dass bei den bisherigen Systemen, bei denen die Laufwagen sich streckenweise durch Schwerkraft angetrieben von selbst auf Laufschienen vorwärts bewegen müssen, Behinderungen im Lauf der Laufwagen vor allem dort auftreten, wo der Laufweg räumliche Kurven einschliesst. Derartige Behinderungen, die auch von der Art der transportierten Güter abhängen, können den Betrieb eines solchen Fördersystems deutlich beeinträchtigen

### Darstellung der Erfindung

Es ist daher eine Aufgabe der Erfindung, eine laufsichere Laufschiene, insbesondere für eine Schwerkraftförderanlage zur Verfügung zu stellen. Eine solche Laufschiene soll einen laufsicheren Transport von Gütern unterschiedlicher Massen und/oder Abmessungen auf nahezu beliebigen Laufwegen ermöglichen.

Eine weitere Aufgabe der Erfindung ist es, ein vorteilhaftes Verfahren zur Herstellung einer solchen Laufschiene zur Verfügung zu stellen.

Diese und andere Aufgaben werden durch die Ansprüche 1 und 12 gelöst. Ausgestaltungen der Erfindung ergeben sich aus den abhängigen Ansprüchen. Die erfindungsgemässe Laufschiene für ein Fördersystem, insbesondere für einen Schwerkraftförderer, umfasst die Merkmale des Anspruchs 1.

Der dritte in horizontaler Richtung offene Profilabschnitt kann in vertikaler Richtung nach oben oder nach unten geöffnet sein.

In einer Ausgestaltung der Erfindung kann er auch in vertikaler Richtung sowohl nach oben als auch nach unten geöffnet sein. Dabei ist es im Rahmen der vorliegenden Erfindung auch möglich, dass eine Laufschiene auch wenigstens abschnittsweise um ihre Längsachse gedreht sein kann, wodurch sich natürlich die Ausrichtung der Profile auch ändert.

In einer Ausgestaltung der Erfindung können die ersten und zweiten Rollen Tragrollen und die dritten Rollen Führungsrollen sein. Die Rollen können diese Funktionen zeitweilig ändern und/oder vertauschen, wie später noch genauer erläutert wird.

Eine Ausgestaltung der Laufschiene nach der Erfindung zeichnet sich dadurch aus, dass der dritte Profilabschnitt spiegelsymmetrisch zur vertikalen Mittelebene der Laufschiene ausgebildet und angeordnet ist.

Erfindungsgemäß weist der erste, zweite und dritte Profilabschnitt jeweils ein Querschnittsprofil in U-Form auf umfassend einen Verbindungsabschnitt und beidseitig daran anschliessende Schenkel. Eine weitere Ausgestaltung der Laufschiene nach der Erfindung ist dadurch gekennzeichnet, dass der Verbindungsabschnitt des ersten Profilabschnitts und der Verbindungsabschnitt des zweiten Profilabschnitts senkrecht auf den Verbindungsabschnitt des dritten Profilabschnitts stehen und an diesen anstossen.

Eine weitere Ausgestaltung der Laufschiene nach der Erfindung zeichnet sich dadurch aus, dass der erste und der zweite Profilabschnitt voneinander beabstandet sind und einen sich entlang der Laufschiene erstreckenden Zwischenraum bilden.

Eine weitere Ausgestaltung der Laufschiene ist dadurch ausgezeichnet, dass der sich entlang der Laufschiene erstreckende Zwischenraum oben durch eine mechanische Verbindung zwischen dem ersten und dem zweiten Profilabschnitt geschlossen ist. Ein solcher sich entlang der Laufschiene erstreckender geschlossener Zwischenraum kann auch einzelne Öffnungen aufweisen. Laufschienen nach der Erfindung mit einem solchen geschlossenen Zwischenraum zeichnen sich durch eine besonders hohe Torsionssteifigkeit und auch eine hohe Biegesteifigkeit aus.

Im Rahmen der Erfindung ist es auch möglich, dass ein sich entlang der Laufschiene erstreckender Zwischenraum wenigstens Abschnittsweise verfüllt ist. Insbesondere ist ein Verfüllen mit einem schwingungsdämpfenden bzw. schalldämmenden Stoff möglich. Dadurch können etwa von den Rollen der Laufwagen auf der Laufschiene verursachte Geräusche gedämpft werden und/oder die Eigenfrequenzen bzw. Eigenformen einer Laufschiene gezielt modelliert werden. Alternativ oder in Ergänzung zur Schalldämmung können mit einer solchen wenigstens abschnittsweisen Verfüllung auch die Festigkeit und Steifigkeit einer Laufschiene nach der Erfindung erhöht werden.

Alternativ oder in Ergänzung können auf den nicht als Laufflächen dienenden Oberflächen der Laufschiene auch schalldämmende Strukturen, wie beispielsweise Schwerfolien aufgebracht werden.

Alternativ oder in Ergänzung können in einem sich entlang einer Laufschiene erstreckenden Zwischenraum beispielsweise auch Kabel oder Schläuche, insbesondere solche für Druckluft, zur Steuerung, Kontrolle, Antrieb oder ähnlichem angeordnet sein. Ein sich entlang einer Laufschiene erstreckender Zwischenraum kann auch zur Verbindung mehrerer Laufschienen zu einer Laufschienenstrecke verwendet werden, wie später noch genauer erläutert wird.

Eine weitere Ausgestaltung der Laufschiene zeichnet sich dadurch aus, dass an der Laufschiene Mittel zum Befestigen der Schiene an einer Tragkonstruktion, Decke oder dergleichen vorgesehen sind.

Eine weitere Ausgestaltung der Laufschiene zeichnet sich dadurch aus, dass die erwähnten Mittel zum Befestigen der Schiene auf der Oberseite der Laufschiene angebrachte Laschen umfassen. Solche Laschen können beispielsweise verwendet werden, um die Laufschiene an der Decke eines Gebäudes aufzuhängen.

Bei einer 180° um eine parallel zur Laufrichtung stehende Achse gedrehten Laufschiene können diese Mittel zum Befestigen auch als auf der Unterseite der Laufschiene angebracht angesehen werden.

Eine weitere Ausgestaltung der Laufschiene nach der Erfindung zeichnet sich dadurch aus, dass die erwähnten Mittel zum Befestigen der Schiene durch die Laufschiene hindurchgehende Öffnungen umfassen. Solche Öffnungen können beispielsweise in vertikaler oder horizontaler Richtung durch die Laufschiene hindurchgehen.

Erfindungsgemäß ist die Laufschiene einstückig ausgebildet und durch Biegen eines Metallbandes oder eines Metallstreifens hergestellt In einer nicht erfindungsgemäßen Ausgestaltung der Laufschiene kann diese mehrteilig ausgebildet sein. Insbesondere ist eine Herstellung der Laufschiene aus mehreren Teilen möglich, bei welcher der erste, zweite und dritte Profilabschnitt jeweils eine U-Schiene umfassen, die mechanisch fest, insbesondere stoffschlüssig, miteinander verbunden sind.

Eine weitere Ausgestaltung der Laufschiene nach der Erfindung ist dadurch gekennzeichnet, dass die Laufschiene aus einem Edelstahl oder aus Aluminium gefertigt ist. Als Aluminium werden in diesem Zusammenhang im Rahmen der Erfindung sowohl Aluminiumlegierungen als auch Reinaluminium verstanden.

Durch die Verwendung von Edelstahl kann eine Laufschiene nach der Erfindung einerseits die an sie gestellten mechanischen Anforderungen erfüllen. Andererseits kann eine solche Laufschiene aus Edelstahl auch bestimmten chemischen Anforderungen genügen, wie sie etwa an in der Lebensmittelindustrie verwendete Vorrichtungen gestellt werden.

Eine Ausgestaltung der Laufschiene nach der Erfindung zeichnet sich dadurch aus, dass diese aus einem Edelstahl aus der Gruppe bestehend aus X6Cr17, X5CrNi18-10 hergestellt wird. Diese beiden Legierungen sind gut kaltumformbar und zugleich auch gut schweissbar sind. Beide Legierungen sind zudem für die Verwendung in der Lebensmittelindustrie geeignet.

Eine weitere Ausgestaltung der Laufschiene nach der Erfindung zeichnet sich dadurch aus, dass im Bereich der Enden der Laufschiene Mittel zum Verbinden der Laufschiene mit weiteren Laufschienen zu einer durchgehenden Laufschienenstrecke angeordnet sind.

In einer Ausgestaltung der Laufschiene nach der Erfindung umfassen die Mittel zum Verbinden im Bereich der Enden der Laufschienen angebrachte Löcher Diese Löcher können zum Befestigen von Verbinderteilen, welche in die Enden zu verbindender Schienen einschiebbar sind, dienen. Solche Löcher können in einigen Ausführungsformen auch zugleich als Mittel zur Befestigung einer Laufschiene an einem Gebäude verwendet werden, wie dies bereits beschrieben wurde.

Das erfindungsgemässe Verfahren zur Herstellung einer Laufschiene durch Biegen eines Metallbandes oder eines Metallstreifens umfasst die Schritte:
a) Bereitstellen eines Metallbandes oder -streifens umfassend eine erste und eine zweite, zur ersten parallele Längskante;
b) Biegen des Metallbandes oder -streifens in Form eines Profils, so dass die erste und zweite Längskante des Metallbandes oder -streifens aneinander stossen;
c) Schliessen des Profilkörpers durch Verschweissen der ersten mit der zweiten Längskante des Metallbandes oder -streifens.

Eine Ausgestaltung des Verfahrens nach der Erfindung ist dadurch gekennzeichnet, dass die erste und die zweite Längskante des Metallbandes oder Metallstreifens bei der fertig gebogenen Laufschiene auf deren Oberseite oder Unterseite aneinanderstossen. Dabei ist es möglich, dass die beiden Längsseiten sich wenigstens bereichsweise überlappen, wie später noch genauer erläutert wird.

Insbesondere können die erste und die zweite Längskante des Metallbandes bei der fertig gebogenen Laufschiene ausserhalb der vertikalen Symmetrieebene der Laufschiene aneinanderstossen und in gebogenem Zustand einen vorbestimmten Abstand von der vertikalen Symmetrieebene (bzw. Mittelebene) haben.

Eine weitere Ausgestaltung des Verfahrens nach der Erfindung zeichnet sich dadurch aus, dass das Metallband eine Dicke zwischen 0,5 mm bis 2,5 mm aufweist. Bevorzugt weist das Metallband eine Dicke von 1,0 mm auf.

Eine erfindungsgemässe Laufschiene für einen Förderer eignet sich in besonderem Masse für einen Laufwagen wie er in einer Schweizer Patentanmeldung derselben Anmelderin im Detail beschrieben wird. Jedoch ist eine erfindungsgemässe Laufschiene nicht prinzipiell auf die Verwendung mit solchen Laufwagen beschränkt. Insbesondere eignet sich eine solche Laufschiene auch für Einheiten miteinander verketteter Laufwagen.

In der Vergangenheit hat sich gezeigt, dass sich Rollen von Laufwagen für Schwerkraftförderer bei bestimmten Lastfällen so relativ zur Laufschiene ausrichten, dass sich deren Laufwiderstand stark erhöht. Dies kann beispielsweise geschehen, wenn Rollen die eigentlichen Laufflächen einer Laufschiene verlassen und stattdessen mit Flächen mit erheblich höherem Rollwiderstand in Kontakt kommen. Auch kann es bei bestimmten Lastfällen vorkommen, dass die Kontaktkräfte zwischen den Rollen und Laufflächen stark erhöht werden, was ebenfalls eine erhebliche Zunahme des Rollwiderstands zur Folge haben kann.

Ebenso kann ein Laufwagen aufgrund bestimmter äusserer Kräfte unter Umständen so relativ zu einer Laufschiene ausgerichtet werden, dass es zu einem Verklemmen der Laufschiene mit dem Wagenkörper und/oder den Rollen kommen kann, wodurch der Laufwagen abgebremst wird. Die Förderung wird damit unter Umständen wenigstens temporär unterbrochen und/oder der Laufwagen oder die Laufschiene kann beschädigt werden.

Bei Schwerkraftförderern, insbesondere Schwerkrafthängeförderern, wirken einerseits (translatorische) Kräfte in Laufrichtung (x), Kräfte horizontal seitlich zur Laufrichtung (y) und Kräfte in vertikaler Richtung (z) auf einen Laufwagen. Daneben wirken auf einen Laufwagen jedoch auch unterschiedliche Drehmomente, die insbesondere von Beschleunigungen des geförderten Guts, aber auch des Laufwagens selber, während dem Transport entlang der Förderbahn hervorgerufen werden. Solche Beschleunigungen treten hauptsächlich bei horizontalen und vertikalen Richtungsänderungen und bei Abbremsvorgängen oder Geschwindigkeitszunahmen auf.

Als problematisch haben sich dabei für viele aus dem Stand der Technik bekannte Schienenarten vor allem Nickmomente erwiesen, also Drehmomente um seitlich zur Laufrichtung ausgerichtete Achsen (y). Jedoch können - abhängig vom zu fördernden Gut und dem Verlauf der Schienenbahn - ebenso Giermomente problematisch werden, also Drehmomente um vertikal auf die Laufrichtung stehende Achsen (z). Ebensolches gilt für Rollmomente, also Drehmomente um parallel zur Laufrichtung ausgerichtete Achsen (x).

Um einen sicheren Transport, insbesondere eine laufsichere Beförderung der Laufwagen, gewährleisten zu können ist es notwendig, dass die genannten in und an einem Laufwagen auftretenden statischen und dynamischen Belastungen jederzeit auf kontrollierte Weise vom Laufwagen auf die Laufschiene übertragen werden können.

Dazu müssen ein Laufwagen und eine Laufschiene zueinander passend ausgebildet sein.

Zusätzlich ist es jedoch auch notwendig, dass eine Laufschiene eine ausreichende mechanische Festigkeit und Steifigkeit aufweist, um die auf sie wirkenden Lasten ohne strukturelles Versagen oder starke Deformationen aufnehmen zu können.

Eine erfindungsgemässe Laufschiene umfasst dazu Profilabschnitte, die zur Aufnahme von Laufrollen eines Laufwagens geeignet sind, sowie einen Profilabschnitt, der zur Aufnahme von Führungsrollen eines Laufwagens geeignet ist. Die Laufschiene ist dafür so ausgebildet, dass sie von einem als Aussenläufer funktionierenden Laufwagen umgriffen werden kann.

Die Gestaltung der Laufschiene für Aussenläufer ermöglicht eine einfache und sichere Reinigung der Laufschienen, was insbesondere in der Lebensmittelindustrie unbedingt notwendig ist.

Der Profilabschnitt zur Aufnahme der Führungsrollen eines Laufwagens kann einerseits dazu dienen, den Laufwagen so zu führen, dass seine Laufrichtung im Wesentlichen mit jener der Laufschiene übereinstimmt. Dies geschieht indem vom Profilabschnitt zur Aufnahme der Führungsrollen beispielsweise in Kurvenabschnitten Zentripetalkräfte auf die Führungsrollen ausgeübt werden, wodurch der Laufwagen umgelenkt wird. Zudem werden beispielsweise bei Laufwagen mit mehreren Führungsrollen durch die zugeordneten Profilabschnitte die Gierbewegungen beschränkt, etwa die maximale mögliche Rotation eines Laufwagens gegenüber der Laufschiene um eine vertikale Achse (z). Dadurch kann die Laufrichtung (bzw. die Ausrichtung) des Wagens nicht über ein vorbestimmtes Mass von jener der Laufschiene abweichen.

Damit wird zugleich verhindert, dass die Tragrolle eines Laufwagens mit Teilen der Laufschiene in Kontakt kommen, die keine Laufflächen sind. Gleichzeitig können durch die Führung eines Laufwagens mittels im entsprechenden Profilabschnitt der Laufschiene angeordneten Führungsrollen auch auf den Laufwagen wirkende Giermomente von der Laufschiene aufgenommen werden.

Die bei einer Laufschiene nach der Erfindung vorhandenen beiden Profilabschnitte zur Aufnahme von Tragrollen dienen einerseits dazu das Gewicht eines geförderten Förderguts und jenes eines Laufwagens aufzunehmen. Zusätzlich können diese Profilabschnitte aber dazu verwendet werden, um Nickbewegungen eines Laufwagens relativ zur Laufschiene zu begrenzen. Solche können beispielsweise bei abfallenden (oder ansteigenden) Laufwegen auftreten.

Eine solche Beschränkung von Nickbewegungen kann nach der Erfindung beispielsweise erreicht werden, wenn ein Laufwagen beispielsweise über zwei Paare hintereinander angeordneter Tragrollen verfügt, die jeweils in einem Profilabschnitt angeordnet sind.

Durch Verkettung mehrerer Laufwagen mit jeweils nur einer Tragrolle pro Seite kann ebenfalls eine solche Beschränkung erzielt werden.

Bei einem solchen Laufwagen wird ein Nicken eines Laufwagens bei einem abfallenden Laufweg nur soweit zugelassen, bis eine vordere Tragrolle eines Rollenpaares mit einer oberen Lauffläche der Laufschiene in Kontakt kommt und einer hintere Tragrolle mit einer unteren Lauffläche in Kontakt ist. Nickmomente können so von einem Laufwagen auf eine erfindungsgemässe Laufschiene übertragen werden, ohne dass der Rollwiderstand des Laufwagens wesentlich zunimmt. Ebenso wird durch eine solche Beschränkung von Nickbewegungen verhindert, dass die Führungsrollen mit Bereichen der Laufschiene in Kontakt kommen, die keine Laufflächen sind.

Zudem werden die von den entsprechenden Profilabschnitten einer erfindungsgemässen Laufschiene aufgenommenen Tragrollen innerhalb der Profilabschnitte so gelagert, dass auch Rollmomente von einem Laufwagens relativ zur Laufschiene auf diese übertragen werden können. Solche Rollmomente können beispielsweise in Kurvenabschnitten auftreten. Bei reinen Rollmomenten wird eine Rollbewegung erzeugt, die dazu führt, dass die Tragrollen auf einer ersten Seite eines Laufwagens mit den oberen Laufflächen des ersten Profilabschnitts der Laufschiene und die Tragrollen auf einer zweiten Seite eines Laufwagens mit den unteren Laufflächen des zweiten Profilabschnitts in Kontakt kommen, oder umgekehrt. Eine solche Kontaktierung definiert eine maximale Rollbewegung. Dadurch wird eine maximale Rollbewegung zwischen einem Laufwagen und er Tragschiene definiert und verhindert, dass die Führungsrollen mit Teilen der Laufschiene in Kontakt kommen, die keine Laufflächen sind.

Bei dem erfindungsgemäßen Verfahren zur Herstellung der Laufschiene wird eine solche aus einem Metallband oder -streifen mittels einem Biegeverfahren hergestellt. Insbesondere kann ein solches Verfahren eine (Kalt-) Profilierung umfassen. Dadurch wird eine massgenaue und reproduzierbare Fertigung einer Laufschiene möglich.

Ebenso weisen insbesondere kaltprofilierte Laufschienen im Allgemeinen Oberflächen geringerer Rauwerte auf, als jene mit anderen Verfahren hergestellter Laufschienen. Somit kann der Aufwand für die Nachbearbeitung der Laufflächen nach dem Kaltprofilieren reduziert werden, oder eine solche Nachbearbeitung ist gar nicht mehr notwendig.

Bei dem Herstellungsverfahren mittels Biegen kann es vorteilhaft sein, wenn die Längskanten des ursprünglichen Metallbandes oder -streifens nach erfolgter Biegung bzw. Profilierung aneinander und parallel zueinander oder wenigstens abschnittsweise übereinander liegen, damit diese anschliessend mechanisch verbunden werden können.

Eine solche Verbindung kann beispielsweise eine Schweissnaht umfassen. Eine solche Schweissnaht kann durchgehend entlang einer Laufschiene verlaufen oder auch durchbrochen sein. Eine Schweissnaht kann auch Schweisspunkte umfassen.

Für bestimmte Anwendungsgebiete einer Laufschiene, wie auch für Laufschienen aus bestimmten Materialien und/oder mit relativ geringen Blechdicken, kann es vorteilhaft sein, wenn eine Schweissnaht mit einem Laserschweissverfahren erzeugt wird.

Je nach Ausführungsform kann es vorteilhaft sein, wenn eine solche Schweissung nicht in einer vertikalen Symmetrieebene der Laufschiene erfolgt, sondern davon beabstandet ist. Dadurch kann beispielsweise eine mechanisch nachteilige Überlagerung von in der Symmetrieebene angebrachten Befestigungs- und/oder Verbindungsmitteln mit der Schweissung vermieden werden.

Durch eine nach der Erfindung mögliche Anordnung der Schenkel des dritten Profilabschnitts senkrecht zu und ungefähr mittig auf den unteren Schenkeln des ersten und zweiten Profilabschnitts kann zudem die strukturelle Steifigkeit und Festigkeit der unteren Schenkel des ersten und zweiten Profilabschnitts, und damit auch der ganzen Laufschiene erhöht werden. Die senkrecht zueinander angeordneten Schenkel können dabei auch als T-Träger verstanden werden, bei welchen die vertikal angeordneten Schenkel des dritten Profils die horizontal angeordneten unteren Schenkel des ersten und zweiten Profils effizient verstärken und versteifen. Durch die ungefähr mittige Anordnung der Schenkel des dritten Profilabschnitts auf den unteren Schenkeln des ersten und zweiten Profilabschnitts, werden letztere gestützt und damit versteift. Somit kann auch bei einer relativ niedrigen Wandstärke im Bereich dieser Schenkel eine Formstabilität der Laufflächen gewährleistet werden. Damit können die Wandstärken der Laufschienen reduziert werden, wodurch leichtere und kostengünstigere Laufschienen hergestellt werden können. Ebenso trägt dies dazu bei, dass Laufschienen nach der Erfindung wie bereits erwähnt auch mittels Kaltprofilierens aus relativ dünnen Blechen hergestellt werden können.

Gute Laufeigenschaften für einen Laufwagen können erzielt werden, wenn eine Laufschiene eine Gesamtbreite von ungefähr 35 bis 45 mm, insbesondere von ungefähr 40 mm, und eine Gesamthöhe von ungefähr 35 bis 45 mm, insbesondere ungefähr 40 mm, aufweist. Bei Laufschienen mit einer Gesamthöhe und Gesamtbreite von ungefähr 40 mm hat sich gezeigt, dass besonders gute Laufeigenschaften erzielt werden können, wenn ein daran angebrachter Laufwagen Lauf- und Führungsrollen aufweist, die einen maximalen Durchmesser von 20 mm haben, und die daran angrenzenden Laufflächen mit 20,5 bis 21,5 mm voneinander beabstandet sind.

Ein mit solchen Laufschienen aufgebautes Schwerkraftfördersystem ist insbesondere zur Förderung von Transportgut mit einer Masse zwischen etwa 50 Gramm und 30 Kilogramm geeignet. Jedoch kann eine erfindungsgemässe Laufschiene bei entsprechender Skalierung prinzipiell auch zur Förderung von Transportgut mit einer Masse ausserhalb dieses Bereichs verwendet werden.

Die Laufflächen einer Laufschiene nach der Erfindung können während oder nach der Herstellung der Laufschiene speziell oberflächenbehandelt werden, beispielsweise poliert werden

### Kurze Erläuterungen zu den Figuren

Die Erfindung soll nachfolgend anhand von Ausführungsbeispielen im Zusammenhang mit den beiliegenden Zeichnungen näher erläutert werden. Es zeigen schematisch:
- Fig. 1: eine Ausführungsform einer Laufschiene in Profilansicht;
- Fig. 2: die Ausführungsform aus Fig. 1 mit einem Mittel zur Verbindung zweier Laufschienen in Profilansicht;
- Fig. 3: eine nicht erfindungsgemäße Ausführungsform einer Laufschiene in Profilansicht;
- Fig. 4: eine nicht erfindungsgemäße Ausführungsform einer Laufschiene in Profilansicht;
- Fig. 5: eine Ausführungsform einer Laufschiene mit einem Mittel zur Verbindung zweier Laufschienen in einer perspektivischen Ansicht von oben;
- Fig. 6: ein Laufwagen in der Laufschiene aus Fig. 1;
- Fig. 7: ein Laufwagen in der Laufschiene aus Fig. 2;
- Fig. 8a: ein Laufwagen in der Laufschiene aus Fig. 4;
- Fig. 8b: ein Laufwagen in einer um 180° um eine Längsachse gedrehten Laufschiene aus Fig. 4.

### Wege zur Ausführung der Erfindung

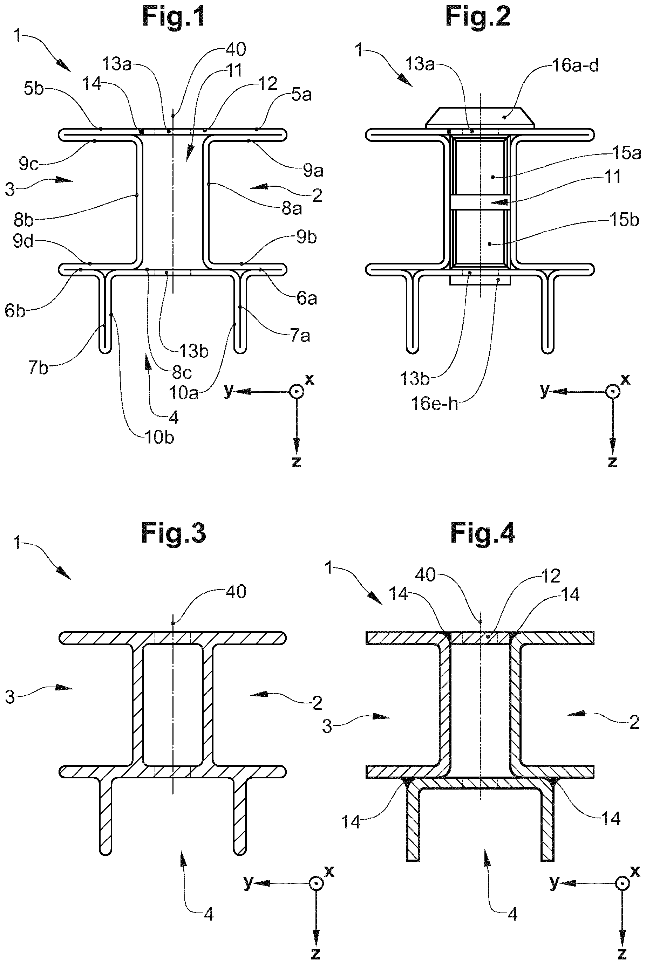

Die **Figuren 1** und 2 zeigen Ausführungsformen einer Laufschiene 1 wie sie etwa für einen Schwerkrafthängeförderer verwendet werden kann. Wie in **Figur 1** gezeigt, umfasst die Laufschiene 1 erste, zweite und dritte Profilabschnitte 2, 3, 4, die jeweils eine U- bzw. C Form aufweisen. Diese Profilabschnitte sind so angeordnet, dass sich im Gesamtprofil der Laufschiene 1 obere horizontale Schenkel 5a,b und untere horizontale Schenkel 6a,b ergeben. Diese Schenkel werden jeweils durch vertikale Verbindungsabschnitte 8a, 8b verbunden. Der erste und zweite Profilabschnitt 2, 3 sind spiegelsymmetrisch zur vertikalen Mittelebene (Symmetrieebene) 40 angeordnet.

Auf der unteren Seite der Laufschiene 1 sind zwei vertikale Schenkel 7a,b angeordnet, die durch einen horizontalen Verbindungsabschnitt 8c verbunden sind. Die Innenseiten der horizontalen Schenkel 5a,b, 6a,b sind jeweils als horizontale Laufflächen 9a-d für die Tragrollen eines Laufwagens (nicht gezeigt) ausgebildet. Die Innenseiten der vertikalen Schenkel 7a,b sind jeweils als vertikale Laufflächen 10a,b für die Führungsrollen eines Laufwagens (nicht gezeigt) ausgebildet.

Zwischen den Verbindungsabschnitten 8a-c befindet sich ein sich in Schienenlängsrichtung erstreckender Zwischenraum 11, der auf seiner Oberseite durch eine mechanische Verbindung 12 geschlossen ist.

In der gezeigten Laufschiene 1 sind zudem entlang der Laufrichtung (X-Achse) verteilte Befestigungsöffnungen 13a,b im horizontalen Verbindungsabschnitt 8c, sowie der mechanischen Verbindung 12 angeordnet. In solchen können beispielsweise Schrauben zur Aufhängung einer Laufschiene 1 oder zum Verbinden mehrerer Laufschienen 1 mittels eines entsprechenden Verbinders angebracht werden, wie noch gezeigt wird.

Die in **Figur 1** gezeigte Laufschiene 1 kann beispielsweise mittels eines Biegeverfahrens aus einem Metallband hergestellt werden. Wie in der **Figur 1** schematisch gezeigt kann dazu ein Metallband jeweils an den äusseren Enden der oberen horizontalen Schenkel 5a,b, der unteren horizontalen Schenkel 6a,b und der vertikalen Schenkel 7a,b um 180° umgebogen werden. Bei der gezeigten Laufschiene wurde das Metallband zudem so umgeformt, dass seine beiden Längskanten im gebogenen Zustand einen vorbestimmten Abstand von der vertikalen Symmetrieebene der Laufschiene 1 aufweisen, aneinander angrenzen und mit einer dadurch dezentralen Schweissnaht 14 verbunden sind.

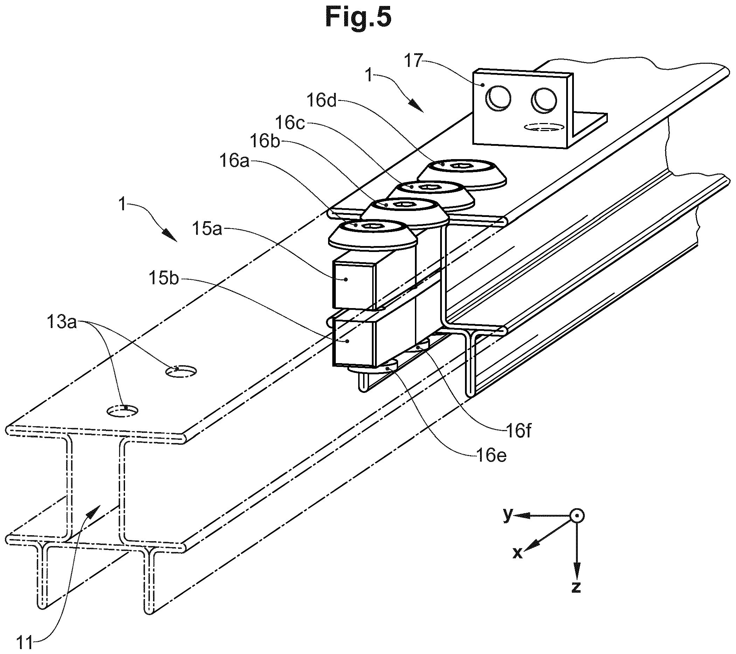

Wie in **Figur 2** und **Figur 5** gezeigt wird können bei der gezeigten Ausführungsform mehrere Laufschienen 1 mittels in deren Zwischenraum 11 angeordneten oberen und einem unteren Verbinder 15a,b mechanisch fest zusammengehängt werden. Dazu wird ein erstes Ende eines Verbinders 15a,b in den Zwischenraum 11 einer ersten Laufschiene 1 und ein zweites Ende in den Zwischenraum 11 einer zweiten Laufschiene eingeführt. Anschliessend werden die Verbinder 15a,b mit den Laufschienen 1 mittels Verbindungsschrauben 16a-h durch die Befestigungsöffnungen 13a,b hindurch verschraubt.

Wie in den **Figuren 5 bis 8** gezeigt, kann eine Laufschiene über Aufhängemittel oder Stützmittel, beispielsweise in Form eines Winkels 17 verfügen. Ein solcher Winkel 17 kann an der Oberfläche einer Laufschiene 1 beispielsweise angeklebt, angenietet, angeschraubt oder angeschweisst werden. Alternativ oder in Ergänzung kann eine solche Lasche auch in einer in der Laufschiene angebrachten Befestigungsöffnung verschraubt werden.

Die **Figur 3** zeigt eine nicht erfindungsgemäße Ausführungsform einer Laufschiene 1, die einstückig hergestellt wurde und keine Fügestellen aufweist. Eine solche Herstellung kann etwas mittels eines Strangpressverfahrens erfolgen.

Wie in **Figur 4** gezeigt, kann eine Laufschiene 1 in einer nicht erfindungsgemäßen Ausführungsform auch aus mehreren Komponenten aufgebaut werden. Die gezeigte Laufschiene 1 besteht dabei aus drei U-Profilen und einer mechanischen Verbindung 12, die jeweils einen Profilabschnitt 2, 3, 4 bilden und durch Schweissnähte 14 mechanisch (stoffschlüssig) verbunden sind. Anstelle von Schweissnähten können auch Klebeverbindungen, Verschraubungen, Lötverbindungen oder andere Fügeverfahren eingesetzt werden.

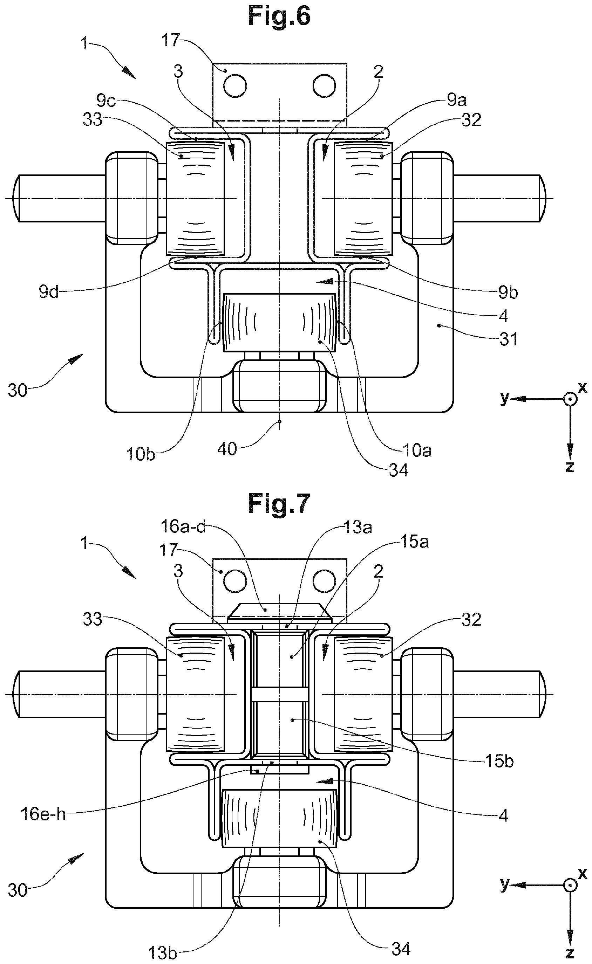

In **Figur 6** ist gezeigt, wie ein Laufwagen 30 als Aussenläufer auf einer Laufschiene 1 wirkt. Der Laufwagen 30 verfügt über Paare hintereinander angeordneter (in x-Richtung) erster Laufrollen 32 und zweiter Laufrollen 33, wobei in der Abbildung jeweils nur die im Vordergrund stehenden Laufrollen sichtbar sind. Die ersten Tragrollen 32 sind dabei im Bereich des ersten Profilabschnitts 2 zwischen dem oberen horizontalen Schenkel 5a und dem unteren horizontalen Schenkel 6a angeordnet. Dasselbe gilt in entsprechender Weise für die zweiten Tragrollen 33 und den zweiten Profilabschnitt 3. Die ersten und zweiten Tragrollen 32, 33 können jeweils entweder unten mit einer unteren horizontalen Lauffläche 9b, 9d oder oben mit einer oberen horizontalen Lauffläche 9a, 9c in rollendem Kontakt sein. Dazu ist der vertikale Abstand zwischen den horizontalen Laufflächen etwas grösser gewählt als der maximale Durchmesser der Tragrollen.

Der Laufwagen 30 umfasst auch ein Paar hintereinander angeordneter (in x-Richtung) Führungsrollen 34, die im Bereich des dritten Profilabschnitts 4 zwischen den vertikalen Schenkeln 7a, 7,b angeordnet sind. Die Führungsrollen 34 können jeweils an einer der beiden vertikalen Laufflächen 10a, 10b in rollendem Kontakt sein. Auch hier ist der (horizontale) Abstand zwischen den vertikalen Laufflächen etwas grösser gewählt als der maximale Durchmesser der Führungsrollen.

Aufgrund dieser Anordnung der Laufflächen relativ zu den Rollen eines Laufwagens sind solche Verschiebungen oder Verdrehungen des Laufwagens 30 relativ zur Laufschiene 1 ausgeschlossen, die zu einer Berührung der Rollen mit Teilen der Laufschiene führen würden, die nicht Laufflächen sind. Ebenso wird eine direkte Berührung des Laufwagenkörpers 31 mit der Laufschiene 1 verhindert.

Die **Figur 7** zeigt eine Laufschiene 1 mit Verbindern 15a,b analog zu den **Figuren 2** **und** **5** mit einem eingesetzten Laufwagen 30. Da die Verbinder 15a,b im Zwischenraum 11 angeordnet und die Verbindungsschrauben 16a-h von den Führungsrollen 34 beabstandet sind, kann sichergestellt werde, dass die Laufwagen 30 ungestört auf aufeinanderfolgenden Laufschienen 1 laufen können. Durch die Beschränkung der Nickbewegungen durch die Tragrollen 32, 33 wird ein ausreichender Abstand zwischen denn Führungsrollen und den unteren Verbindungsschrauben 16a-h erreicht.

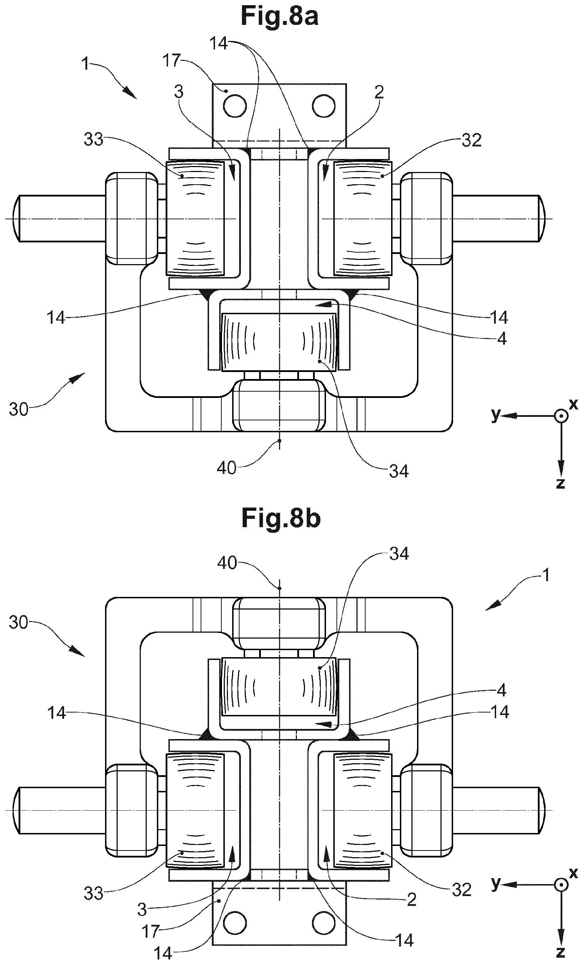

Die **Figur 8a** zeigt die Laufschiene 1 aus Figur 4 mit einem Laufwagen 30. Die Tragrollen 32, 33 und Führungsrollen 34 des Laufwagens 1 sind in im ersten 2, zweiten 3 und dritten Profilabschnitt 4 aufgenommen. Die Schweissnähte 14 zur Verbindung der drei U-Profile sind dabei so angeordnet, dass sie keinen Einfluss auf die Laufeigenschaften des Laufwagens 30 haben.

Die **Figur 8b** zeigte die Laufschiene 1 aus Figur 4, die nicht für hängendes Fördern, sondern für stützendes Fördern verwendet wird und dazu um 180° um ihre Längsachse (parallel zur x-Achse) gedreht wurde. Dadurch kann ein Laufwagen (nicht gezeigt) die Laufschiene 1 von oben her umgreifen und auf dieser fahren. Damit ermöglicht die Laufschiene 1 auch eine Errichtung von Fördersystemen, bei welchem ein Transportgut von unten gestützt - also beispielsweise auf einer auf einem Laufwagen befestigten Platte liegend - gefördert werden kann.

Es können auch mehrere jeweils auf einem Laufwagen befestigte Platten zu einem Plattenverbund zusammengeschlossen werden, auf dem Transportgut von unten gestützt gefördert werden kann.

## Patentansprüche

1. Laufschiene (1) für Förderer, insbesondere für einen Schwerkraftförderer, mit einem Querschnittsprofil umfassend
a. wenigstens drei miteinander verbundene Profilabschnitte, umfassend
b. einen ersten seitlich nach aussen offenen Profilabschnitt (2) zur Aufnahme von ersten Rollen (32) eines Laufwagens (30)
c. einen zweiten seitlich nach aussen offenen Profilabschnitt (3) zur Aufnahme von zweiten Rollen (33) eines Laufwagens (30)
d. einen dritten in vertikaler Richtung offenen Profilabschnitt (4) zur Aufnahme von dritten Rollen (34) eines Laufwagens (30)
e. wobei der erste (2) und der zweite Profilabschnitt (3) spiegelsymmetrisch zu einer vertikalen Mittelebene (40) der Laufschiene (1) angeordnet sind
f. wobei die Laufschiene (1) einstückig ausgebildet und durch Biegen eines Metallbandes oder eines Metallstreifens hergestellt ist,
**dadurch gekennzeichnet, dass**
g. der erste (2), zweite (3) und dritte Profilabschnitt (4) jeweils ein Querschnittsprofil in U-Form, umfassend einen Verbindungsabschnitt (8a-c) und beidseitig daran anschliessende Schenkel (5a,b, 6a,b, 7a,b), aufweisen

2. Laufschiene gemäss Patentanspruch 1, **dadurch gekennzeichnet, dass** der dritte Profilabschnitt (4) spiegelsymmetrisch zur vertikalen Mittelebene (40) der Laufschiene (1) ausgebildet und angeordnet ist.

3. Laufschiene gemäss Patentanspruch 1 oder 2, **dadurch gekennzeichnet, dass** der Verbindungsabschnitt (8a) des ersten Profilabschnitts (2) und der Verbindungsabschnitt (8b) des zweiten Profilabschnitts (3) senkrecht auf dem Verbindungsabschnitt (8c) des dritten Profilabschnitts (4) stehen und an diesen anstossen.

4. Laufschiene gemäss einem der Patentansprüche 1 bis 3, **dadurch gekennzeichnet, dass** der erste (2) und der zweite Profilabschnitt (3) voneinander beabstandet sind und einen sich entlang der Laufschiene (1) erstreckenden Zwischenraum (11) bilden.

5. Laufschiene gemäss Patentanspruch 4, **dadurch gekennzeichnet, dass** der sich entlang der Laufschiene (1) erstreckende Zwischenraum (11) oben oder unten durch eine mechanische Verbindung (12) zwischen dem ersten (2) und dem zweiten Profilabschnitt (3) geschlossen ist.

6. Laufschiene gemäss einem der Patentansprüche 1 bis 5, **dadurch gekennzeichnet, dass** an der Laufschiene (1) Mittel (13a, 17) zum Befestigen der Schiene an einer Tragkonstruktion, Decke oder dergleichen vorgesehen sind.

7. Laufschiene gemäss Patentanspruch 6, **dadurch gekennzeichnet, dass** die Mittel zum Befestigen der Schiene auf der Oberseite oder der Unterseite der Laufschiene (1) angebrachte Winkel (17) umfassen.

8. Laufschiene gemäss Patentanspruch 6, **dadurch gekennzeichnet, dass** die Mittel zum Befestigen der Schiene durch die Laufschiene (1) hindurchgehende Öffnungen (13a,b) umfassen.

9. Laufschiene gemäss einem der Patentansprüche 1 bis 8, **dadurch gekennzeichnet, dass** die Laufschiene (1) aus einem Edelstahl oder aus Aluminium gefertigt ist.

10. Laufschiene gemäss einem der Patentansprüche 1 bis 9, **dadurch gekennzeichnet, dass** im Bereich der Enden der Laufschiene (1) Mittel (13a,b) zum Verbinden der Laufschiene mit weiteren Laufschienen zu einer durchgehenden Laufschienenstrecke angeordnet sind.

11. Laufschiene gemäss Patentanspruch 10, **dadurch gekennzeichnet, dass** die Mittel zum Verbinden im Bereich der Enden der Laufschienen (1) angebrachte Löcher (13a,b) umfassen, welche zum Befestigen von Verbinderteilen (15a,b) dienen, welche in die Enden zu verbindender Schienen einschiebbar sind.

12. Verfahren zur Herstellung einer Laufschiene (1) gemäss einem der Patentansprüche 1 bis 8, umfassend die Schritte:
a. Bereitstellen eines Metallbandes oder Metallstreifens umfassend eine erste und eine zweite, zur ersten parallele Längskante;
b. Biegen des Metallbandes oder Metallstreifens in Form eines Profils, so dass die erste und zweite Längskante des Metallbandes oder Metallstreifens aneinander stossen;
c. Schliessen des Profilkörpers durch Verschweissen der ersten mit der zweiten Längskante des Metallbandes oder Metallstreifens.

13. Verfahren gemäss Patentanspruch 12, **dadurch gekennzeichnet, dass** die erste und die zweite Längskante des Metallbandes oder Metallstreifens bei der fertig gebogenen Laufschiene (1) auf deren Oberseite oder Unterseite (12) aneinanderstossen.

14. Verfahren gemäss Patentanspruch 13, **dadurch gekennzeichnet, dass** die erste und die zweite Längskante des Metallbandes oder Metallstreifens bei der fertig gebogenen Laufschiene (1) ausserhalb der vertikalen Symmetrieebene (40) der Laufschiene (1) aneinanderstossen und einen vorbestimmten Abstand von der vertikalen Symmetrieebene (40) haben.

## Claims

1. Running rail (1) for a conveyor, in particular for a gravity-type conveyor, having a cross-sectional profile comprising
a. at least three interconnected profiled portions comprising
b. a first profiled portion (2), laterally open to the outside, for receiving first rollers (32) of a carriage (30)
c. a second profiled portion (3), laterally open to the outside, for receiving second rollers (33) of a carriage (30)
d. a third profiled portion (4), open in the vertical direction, for receiving third rollers (34) of a carriage (30)
e. wherein the first (2) and the second profiled portion (3) are disposed in a reflection-symmetrical manner to a vertical central plane (40) of the running rail (1),
f. wherein the running rail (1) is integrally formed and manufactured by bending a metal band or a metal strip,
**characterized in that**
g. the first (2), the second (3), and the third profiled portion (4) each have a cross-sectional profile in a U-shape, comprising a connection portion (8a-c) and legs (5a,b; 6a,b; 7a,b) contiguous thereto on both sides.

2. Running rail according to Claim 1, **characterized in that** the third profiled portion (4) is formed and disposed so as to be reflection-symmetrical to the vertical central plane (40) of the running rail (1).

3. Running rail according to Claim 1 or 2, **characterized in that** the connection portion (8a) of the first profiled portion (2) and the connection portion (8b) of the second profiled portion (3) are disposed perpendicularly on the connection portion (8c) of the third profiled portion (4) and abut the latter.

4. Running rail according to one of Claims 1 to 3, **characterized in that** the first (2) and the second profiled portion (3) are mutually spaced apart and form an intermediate space (11) which extends along the running rail (1).

5. Running rail according to Claim 4, **characterized in that** the intermediate space (11), extending along the running rail (1), at the top or the bottom is closed by a mechanical connection (12) between the first (2) and the second profiled portion (3).

6. Running rail according to one of Claims 1 to 5, **characterized in that** means (13a, 17) for fastening the rail to a support structure, a ceiling, or the like are provided on the running rail (1).

7. Running rail according to Claim 6, **characterized in that** the means for fastening the rail comprise angle brackets (17) which are attached to the upper side or to the lower side of the running rail (1).

8. Running rail according to Claim 6, **characterized in that** the means for fastening the rail comprise openings (13a,b) which penetrate the running rail (1).

9. Running rail according to one of Claims 1 to 8, **characterized in that** the running rail (1) is made from a stainless steel or aluminium.

10. Running rail according to one of Claims 1 to 9, **characterized in that** means (13a,b) for connecting the running rail to further running rails, so as to form a continuous running rail track, are disposed in the region of the ends of the running rail (1).

11. Running rail according to Claim 10, **characterized in that** the means for connecting comprise bores (13a,b) which are placed in the region of the ends of the running rails (1) and which serve for fastening connector parts (15a, b) which are insertable into the ends of rails to be connected.

12. Method for manufacturing a running rail according to one of Claims 1 to 8, said method comprising the steps:
a. providing a metal band or a metal strip comprising a first and a second longitudinal edge, the latter being parallel to the first longitudinal edge;
b. bending the metal band or the metal strip to the shape of a profile such that the first and the second longitudinal edge of the metal band or of the metal strip mutually abut;
c. closing the profiled body by welding the first to the second longitudinal edge of the metal band or of the metal strip.

13. Method according to Claim 12, **characterized in that** the first and the second longitudinal edge of the metal band or of the metal strip in the case of the finished bent running rail (1) mutually abut on the upper side or the lower side (12) of the latter.

14. Method according to Claim 13, **characterized in that** the first and the second longitudinal edge of the metal band or of the metal strip in the case of the finished bent running rail (1) mutually abut outside the vertical symmetry plane (40) of the running rail (1), having a predetermined spacing from the vertical symmetry plane (40).

## Revendications

1. Rail de roulement (1) pour un convoyeur, en particulier pour un convoyeur par gravité, avec un profil de section transversale comprenant:
a. au moins trois parties de profilé assemblées les unes aux autres, comprenant
b. une première partie de profilé ouverte latéralement vers l'extérieur (2) destinée à recevoir des premiers galets (32) d'un chariot (30),
c. une deuxième partie de profilé ouverte latéralement vers l'extérieur (3) destinée à recevoir des deuxièmes galets (33) d'un chariot (30),
d. une troisième partie de profilé ouverte en direction verticale (4) destinée à recevoir des troisièmes galets (34) d'un chariot (30),
e. dans lequel la première (2) et la deuxième (3) parties de profilé sont disposées de façon symétrique par réflexion par rapport à un plan médian vertical (40) du rail de roulement (1),
f. dans lequel le rail de roulement (1) est réalisé en une seule pièce et est fabriqué par pliage d'une bande de métal ou d'un feuillard de métal,
**caractérisé en ce que**
g. les première (2), deuxième (3) et troisième (4) parties de profilé présentent respectivement un profil de section transversale en forme de U, comprenant une partie d'assemblage (8a, 8b, 8c) et des ailes (5a, b, 6a, b, 7a, b) se raccordant de part et d'autre à celle-ci.

2. Rail de roulement selon la revendication 1, **caractérisé en ce que** la troisième partie de profilé (4) est formée et disposée de façon symétrique par réflexion par rapport au plan médian vertical (40) du rail de roulement (1).

3. Rail de roulement selon une revendication 1 ou 2, **caractérisé en ce que** la partie d'assemblage (8a) de la première partie de profilé (2) et la partie d'assemblage (8b) de la deuxième partie de profilé (3) sont placées perpendiculairement à la partie d'assemblage (8c) de la troisième partie de profilé (4) et sont adossées à celle-ci.

4. Rail de roulement selon l'une quelconque des revendications 1 à 3, **caractérisé en ce que** la première (2) et la deuxième (3) parties de profilé sont espacées l'une de l'autre et forment un espace intermédiaire (11) s'étendant le long du rail de roulement (1).

5. Rail de roulement selon la revendication 4, **caractérisé en ce que** l'espace intermédiaire (11) s'étendant le long du rail de roulement (1) est fermé dans le haut ou dans le bas par un assemblage mécanique (12) entre la première (2) et la deuxième (3) parties de profilé.

6. Rail de roulement selon l'une quelconque des revendications 1 à 5, **caractérisé en ce qu'**il est prévu sur le rail de roulement (1) des moyens (13a, 17) pour la fixation du rail à une structure de support, un plafond ou analogue.

7. Rail de roulement selon la revendication 6, **caractérisé en ce que** les moyens pour la fixation du rail comprennent des équerres (17) installées sur le côté supérieur ou sur le côté inférieur du rail de roulement (1) .

8. Rail de roulement selon la revendication 6, **caractérisé en ce que** les moyens pour la fixation du rail comprennent des ouvertures (13a, b) passant à travers le rail de roulement (1).

9. Rail de roulement selon l'une quelconque des revendications 1 à 8, **caractérisé en ce que** le rail de roulement (1) est fabriqué en un acier allié ou en aluminium.

10. Rail de roulement selon l'une quelconque des revendications 1 à 9, **caractérisé en ce que** des moyens (13a, b) pour l'assemblage du rail de roulement à d'autres rails de roulement à un rail de roulement continue sont disposés dans la région des extrémités du rail de roulement (1).

11. Rail de roulement selon la revendication 10, **caractérisé en ce que** les moyens d'assemblage comprennent des trous (13a, b) pratiqués dans la région des extrémités des rails de roulement (1), qui servent pour la fixation de parties de connecteurs (15a, b), qui peuvent être introduites dans les extrémités des rails à assembler.

12. Procédé de fabrication d'un rail de roulement (1) selon l'une quelconque des revendications 1 à 8, comprenant les étapes:
a. fournir une bande de métal ou un feuillard de métal comprenant un premier bord longitudinal et un second bord longitudinal parallèle au premier;
b. plier la bande de métal ou le feuillard de métal en forme de profilé, de telle manière que le premier et le second bords longitudinaux de la bande de métal ou du feuillard de métal butent l'un contre l'autre;
c. fermer le corps profilé par soudage du premier et du second bords longitudinaux de la bande de métal ou du feuillard de métal.

13. Procédé selon la revendication 12, **caractérisé en ce que** le premier et le second bords longitudinaux de la bande de métal ou du feuillard de métal butent l'un contre l'autre sur le côté supérieur ou sur le côté inférieur (12) du rail de roulement (1) lorsque celui-ci est entièrement plié.

14. Procédé selon la revendication 13, **caractérisé en ce que** le premier et le second bords longitudinaux de la bande de métal ou du feuillard de métal butent l'un contre l'autre en dehors du plan de symétrie vertical (40) du rail de roulement (1) et sont espacés d'une distance prédéterminée du plan de symétrie vertical (40), lorsque le rail de roulement (1) est entièrement plié.
